# EUROPEAN PATENT SPECIFICATION

(11) **EP 0 474 261 B1**
(45) Date of publication and mention of the grant of the patent: **28.09.1994**
(21) Application number: 91118355.6
(22) Date of filing: 17.11.1988
(51) Int. Cl.: A23G 3/00, A23P 1/08, A23L 1/06, A23G 3/02, A23G 3/12

(54) **Production of gelatin jelly confections**
Herstellung von Gelatinegelee-Konfekten
Production de confiseries de gelée de gélatine

(30) Priority: 25.11.1987 JP 296853/87; 29.12.1987 JP 333848/87
(43) Date of publication of application: 11.03.1992
(62) Divisional of application: 88119154.8
(73) Proprietor: MEIJI SEIKA KAISHA LTD., Chuo-ku Tokyo 104 (JP)
(72) Inventor: Takahashi, Hiroyuki, c/o Meiji Seika Kaisha, Ltd., Sakado-shi, Saitama-ken (JP); Ooki, Takeo, c/o Meiji Seika Kaisha, Ltd., Sakado-shi Saitama-ken (JP); Ishii, Kikujiro, c/o Meiji Seika Kaisha, Ltd., Sakado-shi Saitama-ken (JP); Kanegae, Minoru, c/o Meiji Seika Kaisha, Ltd., Sakado-shi Saitama-ken (JP); Sato, Toshio, c/o Meiji Seika Kaisha, Ltd., Sakado-shi Saitama-ken (JP); Habuto, Akinaka, c/o Meiji Seika Kaisha, Ltd., Sakado-shi Saitama-ken (JP); Murata, Tadahiko, c/o Meiji Seika Kaisha, Ltd., Sakado-shi Saitama-ken (JP)
(74) Representative: Wächtershäuser, Günter, Prof. Dr.

(56) References cited:
- FR-A- 2 165 312
- PATENT ABSTRACTS OF JAPAN vol. 12, no. 258 (C-513)(3105), 20 July 1988; & JP - A - 6342659 (Q P CORP) 23.02.1988
- PATENT ABSTRACTS OF JAPAN vol. 5, no. 79 (C-56)(751),23 May 1981; & JP - A - 5626152 (FUJI SEIYU K.K.) 13.03.1981
- PATENT ABSTRACTS OF JAPAN vol. 6, no. 139 (C-116)(1017), 28 July 1982

## Description

The present invention relates to a production of gelatin jelly confections, and more particularly to a process for the production of the gelatin jelly confection of an oil-in-water type emulsified jelly mass as well as a process for simultaneously shaping and wrapping the jelly confection.

A jelly confection is one of popular cofections because of its unique texture. The gelatin jelly confection contains gelatin and sugar, as main ingredients and contains water of a range of 10 to 90% by weight. In general, the gelatin jelly confection has been prepared by adding gelatin, sugar and other ingredients into water, heating the same to dissolve the ingredients, depositing the resulting hot solution into stamped starch molds, colling the same to cause a solidification, drying the same, and then removing from the starch molds. Such a conventional gelatin jelly confection is hygroscopic and shows adhesiveness. In order to prevent sticking of pieces of the gelatin jelly confection with one another, each piece has been wrapped with a drum dried thin film of α-starch, or coated with a fatty or oily confectionary material such as chocolate, confectioner's coating, oily yoghurt or the like.

Even if a piece of the gelatin jelly confection is covered with sugar crystals moistured with steam or water, or coated with the fatty or oily confectionary material, moisture will permeate from inside thereof to soften or dissolve the coating, as the time lapses. Therfore, such a measure has been proposed that powder of drum dried thin film of α-starch is applied to the outer surface of the jelly confection, prior to the coating treatment [Jap. Pat. No. 48 - 68774 (A)].

Pieces of the jelly confection have been coated with the fatty or oily confectionary coating material not only for the purpose of preventing the pieces from sticking with one another but also for the purpose of providing a variety on the jelly confection by giving different tastes and/or textures. However, the coating requires one additional step therefor and further, there are possible fears that the coating is not suitably applied for or may be broken later, for instance on the way of transport to the market.

Therefore, the present inventors have energetically studied on a production of new type jelly confection, in which the fatty or oily confectinary coating material is composed, in lieu of coating therewith. As a result, it has been found that such new type jelly confection can be prepared by adding an emulsifier and setting water content thereof at a higher level. But, it is also found that an outer surface of the resulting jelly confection is sticky, a mouth feel of the same is too soft, and the product requires an expensive chilled transportation or distribution, in order to avoid its deterioration.

A jelly mass has, in general, stickness which makes its handling for shaping and wrapping the same troublesome, but the following processes have been proposed as shaping and wrapping one having a relatively high efficiency.
a) A process, wherein a jelly cpnfection is pressed out by a pneumatic pressure from a molding opening at one end of a vessel storing the jelly mass, or with use of an extruder, the resulting molded elongating jelly confection is cut into pieces with a desired length, and then each piece is wrapped with a suitable wrapping material [Jap. Pat. No. 48 - 75766 (A)],
b) A process, wherein a given amount of jelly mass is deposited into a deformable mold, the jelly mass in the mold is chilled to cause solidification thereof, the mold is deformed to take out the solidified jelly piece on a drum dried thin film of α-starch, the jelly confection pieces are arranged to cause no contact with one another to dry the same, the drum dried thin film of α-starch is thereafter removed from each jelly confection piece, and then each dried jelly confection piece is wrapped again with a suitable wrapping material [Jap. Pat. No. 56 - 9292 (B)], and
c) A process, wherein a given amount of jelly mass is deposited into a bag of a thermoplastic resin material or an interspace between a pair of thermoplastic resin films facing each other, and then a heat sealing is carried out at the open end of the bag or along the marginal portions of the films, so as to close them [Jap. Pat. No. 54 - 157869 (A)].

The process disclosed in said Jap. Pat. No. 48 - 75766 (A) does not permit simultaneous shaping and wrapping of the jelly confection. The jelly mass of just after being extruded has no ability for maintaining its shape in definite. It means that separate molds or shaping vessels are required for an actual operation of the process. Therefore, the process has disadvantages that a plurality of molds or shaping vessels are necessary for a large scale production, a large space is required for cooling the jelley confection in the molds or shaping vessels, a remarkable time consuming work is required for washing and drying the molds or shaping vessels after use.

The process disclosed in said Jap. Pat. No. 56 - 9292 (B) does also not permit simultaneous shaping and wrapping of the jelly confection. The process has disadvantages that a remarkable time consuming work is required, since the jelly confection once stuck to the drum dried thin film of α-starch is removed after drying and cutting operations, and then wrapped again, and there is a fear that the jelly confection pieces are contaminated with microbes, while being dried under non-protective condition.

Finally, the process disclosed in said Jap. Pat. No. 54 - 157869 (A) has a disadvantage that in case of using a bag of thermoplastic film, a troublesome operation is required for keeping the mouth of bag in open state while depositing a given amount of the jelly mass therein, or that in case of using the pair of films, a charging rate of the jelly mass is limited, since the heat sealing should be made prior to that a leading edge of the jelly mass flowing down in the interspace between the films reachs to an area to be sealed, which reduces a production efficiency.

A process for the production of a gelatin jelly confection, which does not show any adhesiveness on its outersurface and prevents pieces thereof from sticking one another, has good taste and mouth feel, and permits its distribution at an ambient or normal temperature, is described in EP-A-0 317 899 which is the parent application of the present divisional application.

An object of the invention is to provide a process for shaping a jelly mass into a strip of jelly confection and simultaneously wrapping the same in sanitary condition with an overall suffici production efficiency.

An additional object of the invention is to provide a process for shaping a jelly mass or an oil-in-water type emulsion and simultaneously wrapping the same, which process can be carried out with use of an apparatus simple in structure and easy in its maintenance.

According to the invention, the objects can be attained by a process for shaping a jelly mass or an oil-in-water type emulsion for a jelly confection into a sheet and simultaneously wrapping the same, which comprises steps of supplying a pair of wrapping film strips toward an upper surface of a pair of shaping rolls arranged in pararell with a given gap therebetween and from each direction intersecting to a longitudinal one of the shaping rolls, to pass the wrapping film strips downwardly in facing manner through the gap between the shaping rolls, and supplying the jelly mass to a hopper arranged above the pair of shaping rolls, whereby the jelly mass flowing down from the hopper is sandwitched between the pair of wrapping film strips and the wrapped jelly mass is simultaneously rolled with the shaping rolls to shape the same into the sheet. The simultaneous shaping and wrapping of the jelly mass or the emulsion not only increases a production efficiency but also preferable from the sanitary view point, since the jelly mass can be solidified under the state protected by the wrapping film strips on both sides. For the wrapping film strip, various materials can be employed, such edible films as drum dried thin film of α-starch, pluran or the like, such synthetic resin films permitted as food wrapping purpose as polypropylene, high-density polyethylene, low-density polyethylene or the like, and a paper coated with such a synthetic resin material and the like, can be employed alone or in combination. The wrapped jelly mass is cooled to cause a solidification thereof, and the resulting wrapped jelly confection strips will be cut to make it pieces with a desired size, and accomodated in a carton.

In case of carrying out the process for the production of the jelly confection, the gelatin is selected from those of various grades having a jelly strength and viscosity ranges of from 170 to 320 bloom and 30 to 40 milipoise, respectively, so that the resilience or mouth feel of the final jelly confection product can be changed in wide range from being like --Gyuhi-- (one of soft, resilient, semi-solid Japanese confection which is prepared by kneading steamed refined rice flour, refined sugar and corn syrup) to being like a rubber.

The gelatin containing aqueous solution to be used for the process can be prepared by adding such a gelatin into water and heating to dissolve the same. The gelatin containing aqueous solution is not different from a conventional one, excepting that gelatin content therof is set at a lower level, and may contain a sugar and an emulsifier, as in the conventional one. As the sugar, sucrose, glucose, corn syrup, corn syrup solid or the like may be emploued alone or in combination, but sorbitol or the like sugar alcohol is not preferable, since it increase the viscosity of the mixture to cause bubbles, when the mixture will be emulsified later. There is no specific limitation on an amount of the sugar to be added, but it is preferable to set below 17% by weight based on the mixture, by taking a sugar amount in other ingredients and taste into consideration. When the emulsifier is added to the mixture, it is preferable to select that having HLB value of 8 or more, in view of formation of the oil-in-water type emulsion, and particularly sucrose fatty acid esters are preferably used. Please note that the emulsification is possible without adding any emulsifier, but the addition thereof facilitates the emulsification and stabilize the resulting emulsion. A desired effect by the emulsifier can be attained in the amount of 0.6% by weight or less based on the mixture.

The fatty or oily confectionary material may be selected from a group of chocolates (ordinary chocolate, white chocolate, colored chocolate and the like) having a fat content of about 26 - 50% and a sugar content of about 40 to 45%, a group of oily yoghurts having an oil content of about 26 to 50% and a sugar content of about 40 to 45%, and the like.

In the following, the invention will be explained in more detail, which shall refer to drawings, wherein
Fig. 1 is a schematic illustration showing a jelly confection producing apparatus throughout; and
Fig. 2 is a perspective view of a most essential part of the apparatus shown in Fig. 4 to illustrate a manner for simultaneously shaping and wrapping a jelly mass or oil-in-water type emulsion for a jelly confection.

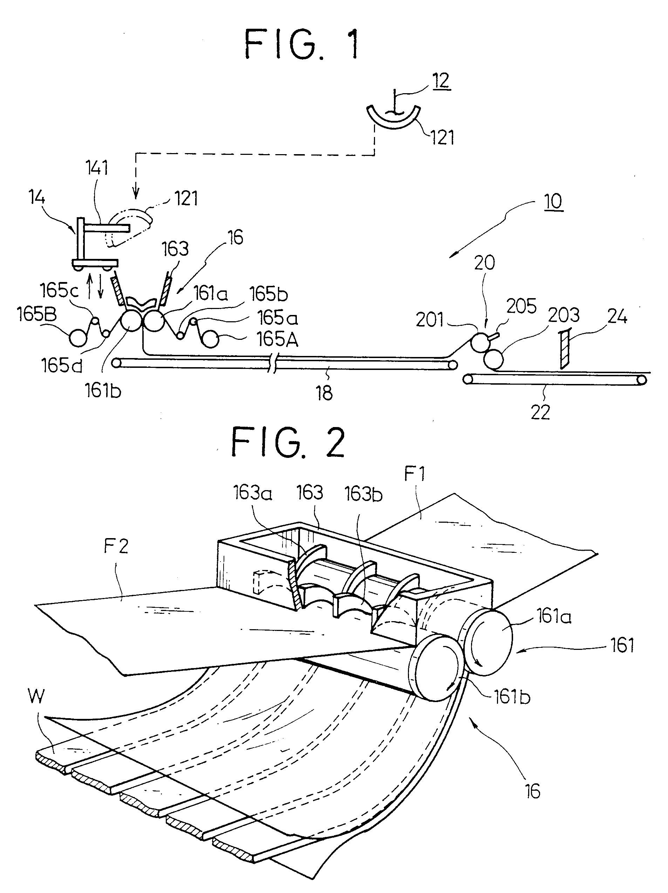

A process according to the invention will be explained in more detail, with reference to Figs. 1 and 2.

A jelly confection producing apparatus indicated by reference numeral 10 comprises vertical planetary mixer 12 with a separate bowl-type vessel 121, a lifter 14 for the vessel 121, a shaping and wrapping mechanism 16, a cooling conveyor 18, a slitter 20, a transporting conveyor 22, and a guillotine cutter 24. The gelatin containing basic solution and the fatty or oily confectionary material, as referrd to before were charged into the vessel 121 and treated therein by the mixer 12 to prepare an oil-in-water type emulsion. Then the vessel 121 is hung to an arm 141 of the lifter 14 and is lifted and turned upside down to feed the emulsion into a hopper 163 of shaping and wrapping mechanism 16.

According to the invention, the apparatus 10 is employed for producing a gelatin jelly confection, but it may be also employed for producing a starch jelly confection.

As clearly shown in Fig. 2, the shaping and wrapping mechanism 16 comprises a pair of shaping rolls 161a, 161b arragned in parallel with a given gap therebetween to rotate in direction opposing to each other, the hopper 163 arranged above the shaping rolls to receive the emulsion from the vessel 121, and a pair of wrapping film strip supply rolls 165a, 165b (see Fig. 1), each arranged on one side of each shaping roll. The shaping rolls 161a, 161b will be rotated at a given constant speed to press the emulsion into an elongated sheet. While, Each of wrapping filmstrips F₁ and F₂ from each of the supply rolls 161A, 161B is fed toward an upper surface of the shaping roll through tension rolls 165a, 165b or 165c, 165d. The wrapping film strips F₁ and F₂ are then led into the gap between the shaping rolls 161a, 161b rotating in facing relation. In this case, the emulsion fed in the hopper 163 was in turn fed into the gap between the shaping rolls 161a, 161b and thus pressed by the shaping rolls 161a, 161b into an elongated sheet sandwiched with the wrapping film strips F₁, F₂.

As shown in Fig. 2, the hopper 163 may have a plurality of partitions 163a and/or 163b being in contact with at least one of the shaping rolls 161a, 161b to form separate webs W of shaped emulsion.

The resulting elongated wrapped emulsion is fed on the cooling conveyor 18 which may be arraged in a cooling tunnel, to cause solidification of the emulsion. The slitter 20 situated downstream of the cooling conveyor 18 comprises a guide roll 201, a tension roll 203, and a plurality of blades 205 fixed to a support (not shown). In the embodiment, the guide roll 201 has circumferencial slots which accomodate each a tip end of the blades 205 to sever the solidified material (jelly confection) and/or wrapping film strips in longitudinal direction thereof. The wrapped, severed and elongated jelly confection is fed to the conveyor belt 22. On the way of the transport by the conveyor 22, the jelly confection is cut in transverse direction by the guillotine cutter 24 to make it into pieces with a desired size. The resulting jelly confection pieces are packed into a carton in a conventional manner for sale.

### Example 1

Gelatin (3.2% by weight --This and following values are based on the total weight of an emulsion to be prepared later--) was added to and dissolved in hot water in a vessel regulated by a thermostat at 60% to prepare a gelatin containing solution. While, an aqueous glucose solution (19.7% by weight) regulated its density in Brix scale to 65.5 and sucrose fatty acid ester (0.1% by weight) of HLB 15 were mixed homogenously and temperature of the mixture was regulated at 60 °C. The both solutions were mixed to prepare a geratin containing basic solution.

The geratin containing basic solution was charged in a vertical planetary mixer kept at 55°C. A chocolate material (67.9% by weight, fat content : 35% by weight, sugar content : 46% by weight) heated to 50°C was added dropwise to the gelatin containing basic solution in the mixer, while agitating the geratin containing basic solution. After completion of the dropping, the mixer was rotated for 1 to 2 minutes at 300rpm.

The resulting oil-in-water type emulsion was charged in a hopper arranged above two smooth shaping rolls arranged in parallel each other. Each of two wrapping film strips was continuously supplied to the shaping roll so as to downwardly pass the gap between the shaping rolls, whereby the emulsion charged in the hopper and flowing down in the gap between the shaping rolls was sandwiched with the wrapping film strips and simultaneously rolled by the shaping rolls. The wrapped and shaped emulsion was forcedly cooled in a cooling tunnel to cause solidification thereof and finally cut into pieces with a desired size.

Followings are particulars of the resulting jelly confection.

| | |
|---|---|
| Gelatin content | 3.2% by weight |
| Fat content | 27.2% by weight |
| Water content | 16.9% by weight |
| Tensile strength | 40g |

The jelly confection had a good chocolate flavor, as well as a suitable stiffness and resilience.

### Example 2

A jelly confection was prepared in the manner as in Example 1, except that an oil-in-water type emulsion was prepared with use of gelatin (4.5% by weight), water (9.1% by weight), an aqeous glucose solution (19.7% by weight) regulated its density in Brix scale to 65.5, sucrose fatty acid ester (0.1% by weight) of HLB 15, and a yoghurt mass (oil content : 40.5% by weight, sugar content : 40.5% by weight).

The yoghurt mass was prepared by mixing in a verticxal planetary mixer sucrose (25.5% by weight), lactose (15% by weight), defatted milk powder (9.0% by weight), fermented milk butter (10.0% by weight), cacao butter (5.0% byweight), a vegitable oil (11.0% by weight), and soy bean lecithin (0.15% by weight), rolling the resulting mixture to make it into flake, and then further mixing the flake with a vegitable oil (24% by weight) and soy bean lecithin (0.35% by weight with use of the vertical planetary mixer.

Followings are particulars of the jelly confection obtained by this Example.

| | |
|---|---|
| Fat content | 28.6% by weight |
| Water content | 15.9% by weight |
| Tensile strength | 70g |

The jelly confection had a good yoghurt flavor, a suitable stiffness and somewhat high resilience.

## Claims

1. A process for shaping a jelly mass into a sheet and simultaneously wrapping the same, which comprises steps of supplying a pair of wrapping film strips toward an upper surface of a pair of shaping rolls (161a, 161b) arranged in pararell with a given gap therebetween and from each direction intersecting to a longitudinal one of the shaping rolls, to pass the wrapping film strips (F₁, F₂) downwardly in facing manner through the gap between the shaping rolls, and supplying the jelly mass to a hopper (163) arranged above the pair of shaping rolls, whereby the jelly mass flowing down from the hopper is sandwitched between the pair of wrapping film strips and the wrapped material is simultaneously rolled by the shaping rolls to shape the same into the sheet.

2. A process as claimed in Claim 1, wherein said hopper (163) has at least one partition (163a; 163b) therein being in contact with at least one of the shaping rolls, (161a, 161b) whereby plural jelly mass webs (W) wrapped throughly with the wrapping film strips are prepared.

3. A process as claimed in Claim 1, wherein said jelly mass is an oil-in-water type emulsion to be prepared by mixing a gelatin containing aqueous solution having gelatin content of 2.5 to 5.5% by weight based on the total weight of the emulsion, and having content of a fat and/or oil due to the fatty and/or oily confectionary material and content of water of 18 to 34% by weight and 11 to 20% by weight, respectively, based on the total weight of the emulsion.

## Patentansprüche

1. Prozeß zum Formen einer Geleemasse in ein Band und zum gleichzeitigen Einhüllen desselben, das folgende Schritte aufweist: Zuführen eines Paars Einhüllfilmstreifen zu den Oberflächen eines Paars Formgebungswalzen (161a, 161b), die unter Einhaltung eines vorgegebenen Spalts parallel zueinander angeordnet sind, jeweils aus einer Richtung, die sich mit der Längsrichtung der Formgebungswalzen schneidet, um die Einhüllfilmstreifen (F₁, F₂) einander zugewandt nach unten durch den Spalt zwischen den Formgebungswalzen zu führen, und Einfüllen der Geleemasse in einen Trichter (163), der über dem Paar Formgebungswalzen angeordnet ist, wodurch die aus dem Trichter nach unten fließende Geleemasse zwischen dem Paar Einhüllfilmstreifen eingebettet wird, wobei das eingehüllte Material gleichzeitig durch die Formgebungswalzen gewalzt wird, um es zum genannten Band zu formen.

2. Prozeß nach Anspruch 1, bei dem der Trichter (163) mindestens eine Unterteilung (163a, 163b) enthält, die in Berührung mit mindestens einer der Formgebungswalzen (161a, 161b) steht, wodurch mehrere Bänder (W) aus Geleemasse hergestellt werden, die durchgehend mit den Einhüllfilmstreifen eingehüllt sind.

3. Prozeß nach Anspruch 1, bei dem die Geleemasse eine Emulsion vom Öl-In-Wasser-Typ ist, die dadurch hergestellt wird, daß eine Gelatine enthaltende wässrige Lösung mit einem Gelatinegehalt von 2,5 bis 5,0 Gew.-% bezogen auf das Gesamtgewicht der Emulsion hergestellt wird, und die einen Gehalt an Fett und/oder Öl aufgrund des fett- und ölhaltigen Konfektionsmaterials von 18 bis 34 Gew.-% und einen Wassergehalt von 11 bis 20 Gew.-% bezogen auf des Gesamtgewicht der Emulsion aufweist.

## Revendications

1. Procédé pour le formage d'une masse de gelée en une feuille, et l'emballage simultané de celle-ci, comprenant les étapes consistant à amener une paire de bandes de film d'emballage vers la surface supérieure d'une paire de cylindres de formage (161a, 161b), disposés parallèlement, avec un interstice défini entre eux, et à partir de chaque direction d'intersection avec le sens longitudinal des cylindres de formage, à faire passer les bandes de film d'emballage (F1, F2) vers le bas, face à face, à travers l'interstice compris entre les cylindres de formage, et à amener la masse de gelée dans une trémie (163) disposée au-dessus de la paire de cylindres de formage, la masse de gelée s'écoulant vers le bas depuis la trémie étant prise en sandwich entre la paire de bandes de film d'emballage et la matière emballée étant laminée simultanément par les cylindres de formage pour leur conférer une forme de feuille.

2. Procédé selon la revendication 1, dans lequel ladite trémie (163) présente au moins une séparation (163a, 163b) qui est en contact avec au moins l'un des cylindres de formage (161a, 161b), ce qui permet de préparer plusieurs las de masse de gelée W emballés complètement par les bandes de film d'emballage.

3. Procédé selon la revendication 1, dans lequel ladite masse de gelée est une émulsion de type huile-dans-l'eau préparée en mélangeant une solution aqueuse contenant de la gélatine, ayant une teneur en gélatine de 2,5 à 5,5 % en poids par rapport au poids total de l'émulsion, et ayant une teneur en graisse et/ou huile, provenant de la matière de confiserie grasse et/ou huileuse, et une teneur en eau de 18 à 34 % en poids et de 11 à 20 % en poids, respectivement, par rapport au poids total de l'émulsion.
